# EUROPEAN PATENT SPECIFICATION

(11) **EP 3 598 026 B1**
(45) Date of publication and mention of the grant of the patent: **21.04.2021**
(21) Application number: 19184907.4
(22) Date of filing: 08.07.2019
(51) Int. Cl.: F25B 31/00

(54) **COOLING SYSTEM**
KÜHLSYSTEM
SYSTÈME DE REFROIDISSEMENT

(30) Priority: 20.07.2018 IT 201800007390
(43) Date of publication of application: 22.01.2020
(73) Proprietor: Daikin applied Europe S.p.A., 00040 Ariccia (Roma) (IT)
(72) Inventor: DEL FERRARO, Luca, 00045 GENZANO DI ROMA (Roma) (IT); MARCHETTI, Marco, 00141 ROMA (IT); SPINOSA, Mattia, 04024 GAETA (Latina) (IT); SORABELLA, Luigi, 00172 ROMA (IT); BUSCO, Mauro, 00118 ROMA (IT)
(74) Representative: Conti, Marco

(56) References cited:
- EP-A2- 1 273 856
- WO-A1-2014/082177
- WO-A1-2016/003467
- WO-A1-2016/040408
- US-A- 6 116 040
- US-A1- 2009 090 113

## Description

This invention relates to a cooling or refrigeration system.

Patent documents US2009/090113A1, WO2014/082177A1, WO2016/003467A1 describe refrigeration systems comprising an evaporator, a compressor, a condenser and an expansion valve. Compressors used in many cooling (or refrigeration) systems generally require close control over the compressor motor speed in order to maintain the system within desired limits under varying load conditions. The compressors are therefore equipped with inverters, or variable frequency drives (VFD), that contain power electronics components (such as insulated gate bipolar transistors) that can overheat and thereafter require cooling. The general procedure to provide cooling to the power electronics is to mount the transistors upon a heat sink and cooling them by circulating coolant (for example, water) in or around the heat sink. This procedure has several drawbacks: it is difficult to control, so that the heat sink temperature may move out of desired temperature and the VFD components may go overheating; moreover, the cooling circuit requires additional components such as a pump and heat exchangers, resulting in high complexity, size and costs.

It is also known, from patent documents US6116040A and EP1273856A2 to cool the VFD components by means of a circuit that shunts a portion of the refrigerant from the condenser of the refrigeration system, wherein said circuit is in a heat transfer relation with the power components of the VFD through a heat sink formed as a serpentine.

However, these systems have the drawback that they do not perform a uniform refrigeration of the power electronics modules, but the modules close to the inlet of the serpentine are more cooled than the modules close to the outlet of the serpentine (where the coolant arrives already warmed). Moreover, the modules may have different temperatures and consequently, the warmest one may require more cooling power than the others, to remain in an acceptable temperature range. In fact, on one side, if the modules are not provided with enough cooling power, they will go overtemperature, with possible damages to the components, on the other side, cooling the modules to a too low temperature would result in condensation (which also causes damages to the components). Furthermore, these systems are suitable for working only with certain refrigerants: specifically, at the inlet of the heat sink, they include an expansion valve, which is not only an expansive component, but it is also sensitive to the type of refrigerant fluid (that means it works efficiently only with certain fluids).

Scope of the present invention is to provide a cooling (or refrigeration) system and a method for cooling which overcome at least one of the aforementioned drawbacks.

This scope is achieved by the cooling system and the method for cooling according to the appended claims.

In an embodiment, the cooling system of the present invention is a temperature conditioning system.

The cooling system comprises a refrigeration circuit. The cooling system comprises a refrigerant fluid. The refrigeration circuit is configured for circulating the refrigerant fluid.

The refrigeration circuit preferably includes a closed loop Carnot refrigeration cycle.

The refrigeration circuit includes a condenser. The condenser is configured for condensing the refrigerant fluid. In the condenser, the refrigerant fluid releases heat to an external fluid (for example external air or water).

The refrigeration circuit includes an expansion valve. The expansion valve is configured for expanding the refrigerant fluid. More generically, the expansion valve may be substituted by an expansion device.

The refrigeration circuit includes an evaporator. The evaporator is configured for evaporating the refrigerant fluid. In the evaporator, the refrigerant fluid absorbs heat from a fluid to be cooled (for example, room air to be cooled or water to be cooled).

The refrigeration circuit includes a compressor. The compressor is configured for compressing the refrigerant fluid. The compressor includes a motor. The motor of the compressor is an electric motor. In an embodiment, the motor of the compressor is an asynchronous electric motor. In an embodiment, the motor of the compressor is a permanent magnets electric motor.

The cooling system comprises a drive for driving the compressor. The drive is a variable frequency drive (an inverter). The drive includes power electronics components. These power electronics components require to be cooled. Actually, an overtemperature in the electronics components would cause damages in the inverter and has to be prevented.

The system according to the current invention comprises a cooling apparatus for cooling the power electronics components of the variable frequency drive.

The cooling apparatus includes an inlet connected to the refrigeration circuit, to receive a portion of the refrigerant fluid from the refrigeration circuit. This portion of the refrigerant fluid is shunted from the refrigeration circuit. The cooling apparatus includes an outlet connected to the refrigeration circuit, to re-insert said portion of the refrigerant fluid into the refrigeration circuit.

The cooling apparatus includes an expansion unit at the inlet of the distributor. The expansion unit is preferably configured to introduce into the cooling apparatus the refrigerant fluid in a phase transition state: actually, in the phase transition, the refrigerant fluid has a high heat transfer coefficient.

The cooling apparatus is configured to provide a heat transfer from the power electronics components of the variable frequency drive to the refrigerant fluid flowing from the inlet to the outlet of the cooling apparatus. The cooling apparatus includes a distributor. The distributor includes an inlet collector connected to the inlet of the cooling apparatus. The distributor includes an outlet collector connected to the outlet of the cooling apparatus. The distributor includes a plurality of pipes. Each pipe of said plurality of pipes has a first end connected to the inlet collector and a second end connected to the outlet collector. Therefore, the pipes are connected in parallel (with the expression "in parallel" it is intended a functional parallel connection): the inlet collector distributes the refrigerant fluid to flow through the pipes towards the outlet collector. In this way, the distributor provides a uniform heat transfer to the drive. Hence, the modules of the variable frequency drive (namely the inverter) are cooled down uniformly, thus avoiding that some of the modules go overtemperature (leading to damages in the electronics components) and some other modules go under temperature (leading to condensation phenomena).

The (power electronics components of the) variable frequency drive comprises a plurality of heating elements (or power modules). The heating elements have to be cooled. For each one of the heating element of said plurality of heating elements, the plurality of pipes includes at least one respective pipe, configured to cool down the heating element. In this way, the distributor provides a uniform cooling to all the heating elements of the variable frequency drive.

Said plurality of heating elements of the variable frequency drive includes a first switch, a second switch and a third switch.

Furthermore said plurality of heating elements of the variable frequency drive includes a rectifier. Actually, the variable frequency drive, in an embodiment, is a three-phase inverter and includes three switches (one for each phase) and a rectifier (bridge). The three switches and the rectifier require cooling.

The plurality of pipes includes at least a first pipe, configured to cool down the first switch, a second pipe, configured to cool down the second switch, a third pipe, configured to cool down the third switch and a fourth pipe, configured to cool down the rectifier. Therefore, for each heating element at least a pipe is provided.

In an embodiment, the distributor further comprises a plurality of additional pipes. The plurality of additional pipes includes, for each heating element of said plurality of heating elements, at least one respective additional pipe, connected in parallel to the respective pipe, to cooperate with it to cool down the respective heating element. Therefore, for each heating element, two pipes are provided (a pipe and an additional pipe), which are connected in parallel between them. The refrigerant fluid is distributed to flow through the pipes and the additional pipes. In this way, a more uniform cooling is provided to the whole surface of the heating element (if it is large, two pipes are more efficient than a single pipe).

In an embodiment, each additional pipe of said plurality of additional pipes has a first end connected to the inlet collector and a second end connected to the outlet collector. Therefore, the plurality of pipes and the plurality of additional pipes are all connected to the inlet collector, at their first end, and to the outlet collector, at their second end. This configuration provides a good distribution of the refrigerant fluid among all the pipes and the additional pipes.

In an embodiment, the pipes of the plurality of pipes and the additional pipes of the plurality of additional pipes are elongated parallel to a transversal direction. This means that the pipes and the additional pipes are all elongated parallelly to each other (with the adverb "parallelly" it is intended a geometrical parallel configuration). This configuration provides a good efficiency in the flow of the fluid through the distributor.

In an embodiment, the first and the second collector are elongated parallel to a longitudinal direction. In an embodiment, the longitudinal direction is perpendicular to the transversal direction. This configuration provides a good efficiency in the flow of the fluid through the distributor, too.

In an embodiment, the cooling system comprises a casing surrounding the distributor. The casing is preferably made of conductive material.

In an embodiment, the casing includes an anti-condensing heater configured to heat up at least one external surface of the casing, for preventing a formation of condensation on an external surface of the casing. The anti-condensing heater may include a resistive element.

In an embodiment, the pipes of the plurality of pipes have an internal corrugated surface, to improve the heat transfer. In an embodiment, the additional pipes of the plurality of additional pipes have an internal corrugated surface, to improve the heat transfer.

In an embodiment, the cooling system comprises a solenoid valve. The solenoid valve is arranged between the inlet of the distributor and the refrigeration circuit (namely upstream of the inlet of the distributor) to regulate the flow of refrigerant fluid fed to the distributor. In an embodiment, the solenoid valve is operable in an open position, to let the refrigerant flow to the distributor, and in a closed position, to prevent a flow of the refrigerant fluid to the distributor. In an embodiment, the solenoid valve is an ON/OFF valve.

In an embodiment, the cooling system comprises a control unit. The control unit is connected to the solenoid valve. In an embodiment, the system comprises a distributor temperature sensor, connected to the control unit. In an embodiment, the distributor temperature sensor is configured to measure the temperature of the distributor. In an embodiment, the distributor temperature sensor is configured to measure the temperature of a casing of the distributor. In an embodiment, the distributor temperature sensor is configured to measure the temperature of power electronic components in heat transfer relation with the distributor. In another embodiment, the temperature of the distributor is calculated by the control unit as a function of the ambient temperature and of the working cycle of the inverter. The control unit is programmed for controlling the solenoid valve as a function of a temperature of the distributor. Preferably, the solenoid valve is controlled retroactively. For example, if the temperature of the distributor reaches a threshold maximum value, the control unit commands an opening of the solenoid valve (namely a positioning of the solenoid valve in the open position), to let the refrigerant fluid flow through the distributor (because a cooling of the distributor is required). Furthermore, if the temperature of the distributor decreases under a threshold minimum value, the control unit commands a closing of the solenoid valve namely a positioning of the solenoid valve in the closed position), since a cooling of the distributor is not required.

Preferably, the refrigerant fluid is a hydrofluoroolefin (HFO). For example, the refrigerant fluid may be HFO-1234yf. In other embodiments, the refrigerant fluid may be a hydrochlorofluorocarbon (HCFC) or a chlorofluorocarbon (CFC).

In an embodiment, the inlet of the distributor is connected to a branch of the refrigerant circuit downstream of the condenser and upstream of the expansion valve. Therefore, the refrigerant fluid is shunted in a liquid phase.

In an embodiment, the cooling system further comprises an economizer, for providing a subcooling of the refrigerant fluid downstream of the condenser and upstream of the expansion valve. Therefore, the economizer is arranged between the condenser and the expansion valve. In an embodiment, the inlet of the distributor is connected to a branch of the refrigerant circuit connecting an outlet of the condenser to an inlet of the economizer. In another embodiment, the inlet of the distributor is connected to a branch of the refrigerant circuit connecting an outlet of economizer to an inlet of the expansion valve.

In an embodiment, the outlet of the distributor is connected to a branch of the refrigerant circuit downstream of the evaporator and upstream of the compressor. In fact, due to the expansion unit and the heat transfer from the electronics components to the refrigerant fluid, the refrigerant fluid at the outlet of the distributor is preferably in a vapor phase.

In an embodiment, the expansion unit is formed as a calibrated orifice. Hence, the refrigerant fluid collected from the refrigeration circuit is fed to the cooling apparatus (namely to the distributor) through a calibrated orifice. The calibrated orifice has several advantages: it has a low cost, moreover it works efficiently with a large number of refrigerant fluid types.

It is here observed that the present disclosure also provides a cooling system comprising a refrigerant fluid, a refrigeration circuit, a VFD for driving the compressor, a cooling apparatus for cooling the power electronics components of the VFD, wherein the cooling apparatus includes an inlet, connected to the refrigeration circuit to receive a portion of the refrigerant fluid from the refrigeration circuit, an outlet, connected to the refrigeration circuit, to re-insert said portion of the refrigerant fluid into the refrigeration circuit, and a calibrated orifice provided at said inlet.

The present invention also provides a method for cooling. In an embodiment, the method for cooling is a temperature conditioning method. The method comprises a step of providing a refrigerant fluid in a refrigeration circuit.

The method comprises a step of condensing the refrigerant fluid (through a condenser).

The method comprises a step of expanding the refrigerant fluid (through an expansion valve).

The method comprises a step of evaporating the refrigerant fluid (through an evaporator).

The method comprises a step of compressing the refrigerant fluid (through a compressor). The compressing step comprises driving the compressor though a variable frequency drive (namely, an inverter). The variable frequency drive includes power electronics components.

The method, comprises a step of cooling down the electronics components of the variable frequency drive. In an embodiment, the cooling step includes a sub-step of drawing a portion of the refrigerant fluid from the refrigeration circuit.

The cooling step includes a sub-step of expanding, through an expansion unit, said portion of the refrigerant fluid. In an embodiment, said expansion unit is formed as a calibrated orifice.

The cooling step includes a sub-step of circulating through a distributor said portion of the refrigerant fluid which has been expanded. Therefore, the power electronics components of the variable frequency drive are cooled down by said portion of the refrigerant fluid flowing through the distributor (from an inlet to an outlet of the distributor). In the cooling step (namely, in the circulating sub-step) the refrigerant fluid is distributed among a plurality of pipes of the distributor, wherein each pipe of said plurality of pipes has a first end connected to an inlet collector of the distributor and a second end connected to an outlet collector of the distributor. The inlet collector receives the refrigerant fluid from the inlet of the distributor and the outlet collector feeds the refrigerant fluid to the outlet of the distributor. Thus, the refrigerant fluid flows through said pipes from the inlet collector to the outlet collector. The pipes are in heat transfer relation with the power electronics components; thus, the refrigerant fluid flowing through the pipes provides a cooling of the power electronics components.

The cooling step includes a sub-step of re-inserting into the refrigeration circuit said portion of the refrigerant fluid released at the outlet of the distributor.

The variable frequency drive comprises a plurality of heating elements. The cooling step comprises, for each heating element of said plurality of heating elements, circulating the refrigerant fluid through at least one respective pipe of said plurality of pipes to cool down the (respective) heating element.

The cooling step further comprises, for each heating element of said plurality of heating elements, circulating the refrigerant fluid through at least one respective additional pipe of a plurality of additional pipes to cool down the (respective) heating element.

Said plurality of heating elements includes a first switch, a second switch, a third switch and a rectifier. The refrigerant fluid is circulated through four pipes and four additional pipes (a couple composed of one pipe and one additional pipe dedicated to each heating element).

In an embodiment, the method comprises a step of regulating a solenoid valve to control the portion of the refrigerant fluid that is fed to the distributor, as a function of a temperature of the distributor.

This and other features of the invention will become more apparent from the following detailed description of a preferred, non-limiting example embodiment of it, with reference to the accompanying drawings, in which:

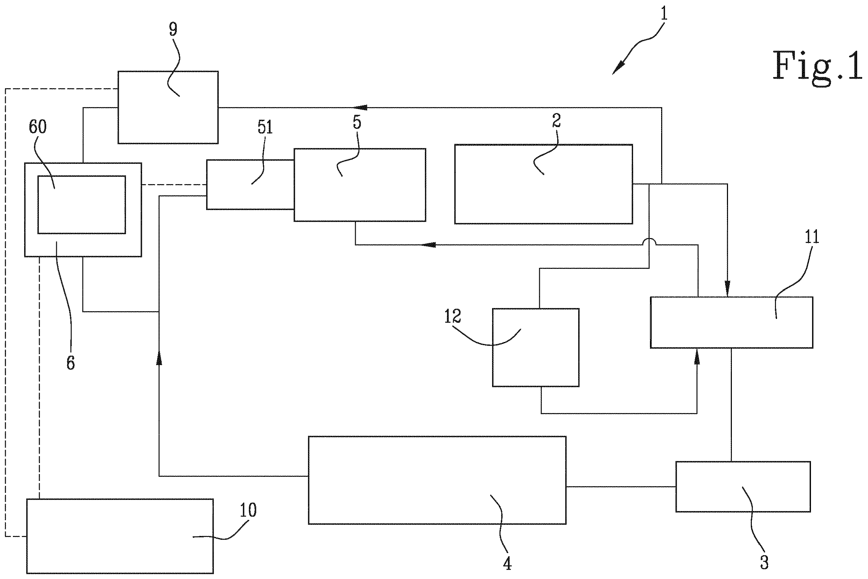

- Figure 1 schematically illustrates a cooling system according to the present invention

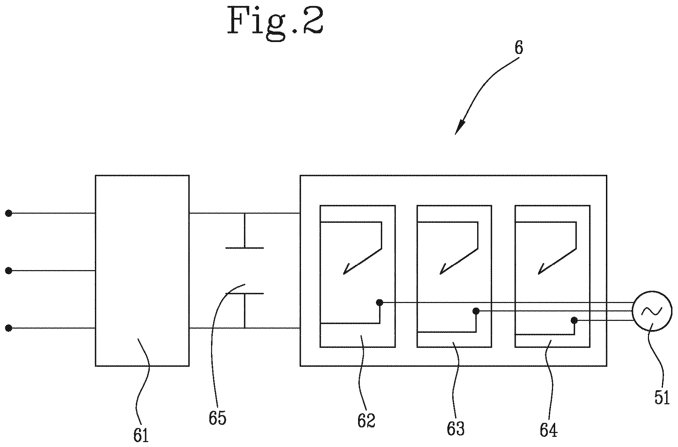

- Figure 2 schematically illustrates a variable frequency drive of the cooling system of figure 1;

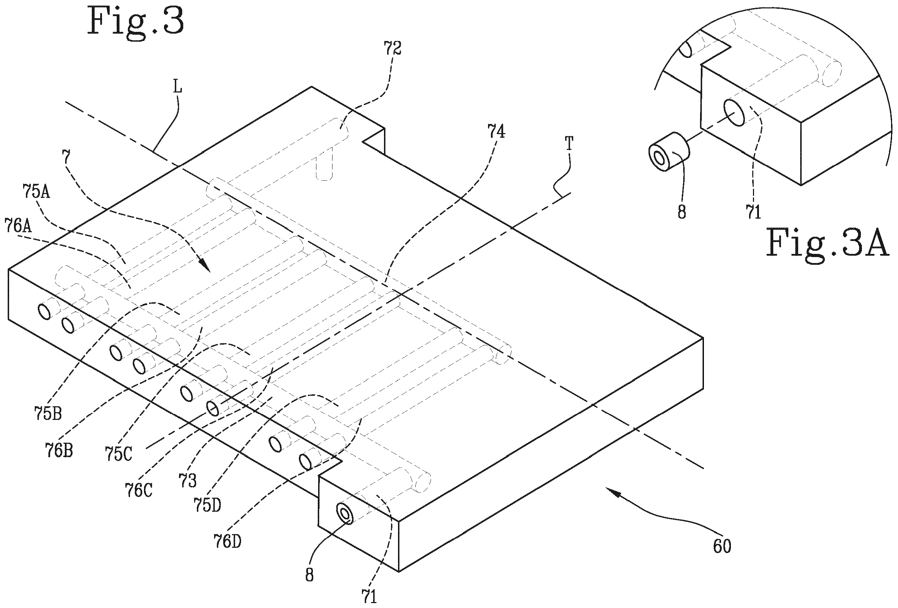

- Figure 3 illustrates a cooling apparatus of the cooling system of figure 1, in perspective view;
- Figure 3A shows a particular of figure 3;

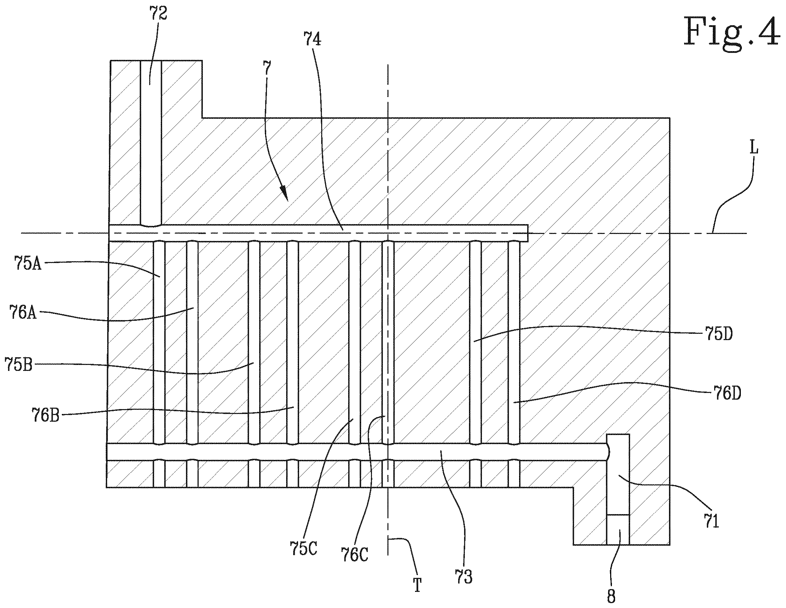

- Figure 4 shows the cooling apparatus of figure 3, in section view.

With reference to the accompanying drawings, the numeral 1 denotes a cooling system.

The cooling system 1 includes a refrigeration circuit, where a refrigerant fluid is circulated. The cooling system 1 comprises a condenser 2 for condensing the refrigerant fluid. The cooling system 1 comprises an expansion valve 3 for expanding the refrigerant fluid. The cooling system 1 comprises an evaporator 4 for evaporating the refrigerant fluid. The cooling system 1 comprises a compressor 5 for compressing the refrigerant fluid. The condenser 2, the expansion valve 3, the evaporator 4 and the compressor 5 are connected in a closed loop which forms a refrigeration circuit. The expansion valve 3 is connected to the refrigeration circuit downstream of the condenser 2 and upstream of the evaporator 4. The compressor 5 is connected to the refrigeration circuit downstream of the evaporator 4 and upstream of the condenser 2.

In an embodiment, the cooling system 1 further comprises an economizer 11 and an economizer expansion valve 12. The economizer 11 is connected to the refrigeration circuit downstream of the condenser 2 and upstream of the (main) expansion valve 3. In an embodiment, a portion of the refrigerant fluid is shunted from the refrigeration circuit downstream of the condenser 2 and is fed to the economizer expansion valve 12; then, the portion of the refrigerant fluid which has expanded in the economizer expansion valve 12 exchanges heat with a main flow of refrigerant fluid going from the condenser 2 to the main expansion valve 3, and is finally joined to the main flow of refrigerant fluid in the compressor 5. This results in a higher flexibility and efficiency of the cooling system 1.

The compressor 5 includes an electric motor 51. The cooling system 1 comprises a variable frequency drive 6 (in the following also referred as inverter 6) for driving the electric motor 51 of the compressor 5. The inverter 6 comprises power electronic components. Specifically, in an embodiment, the inverter 6 comprises a rectifier 61, for receiving alternate current from an electric grid and for rectifying it. The inverter 6, in an embodiment, includes a filter (DC bus) 65. The inverter 6, in an embodiment, includes an inverter stage. The filter 65 is interposed between the rectifier 61 and the inverter stage. In an embodiment, the inverter stage is composed of three switches (in case the inverter 6 is a three-phase inverter). The inverter stage is connected to the electric motor 51 of the compressor 5, for feeding it with alternate voltage. In an embodiment, the inverter 6 (the inverter stage) comprises a first switch 62 for a first phase, a second switch 63 for a second phase and a third switch 64 for a third phase.

The rectifier 61, the first switch 62, the second switch 63 and the third switch 64 form heating elements of the inverter 6: in fact, during their working, they heat up.

The cooling system 1 comprises a cooling apparatus 60, configured for cooling the power electronics components of the variable frequency drive 6, namely the heating elements (the rectifier 61, the first switch 62, the second switch 63 and the third switch 64).

The cooling apparatus 60 includes a distributor 7.

The distributor 7 (or the cooling apparatus 60) has an inlet 71. The inlet 71 is connected to the refrigeration circuit to receive a portion of the refrigerant fluid from the refrigeration circuit. In an embodiment, the inlet 71 is connected to a branch of the refrigeration circuit downstream of the condenser and upstream of the expansion valve 3. In an embodiment, the inlet 71 is connected to an outlet of the condenser 2. In an embodiment, the inlet 71 is connected to a branch of the refrigeration circuit downstream of the condenser 2 and upstream of the economizer 11. In another embodiment, the inlet 71 is connected to a branch of the refrigeration circuit downstream of the economizer 11 and upstream of the expansion valve 3.

The distributor 7 (or the cooling apparatus 60) has an outlet 72. The outlet 72 is connected to the refrigeration circuit, to re-insert said portion of the refrigerant fluid into the refrigeration circuit. In an embodiment, the outlet 72 of the distributor is connected to a branch of the refrigeration circuit downstream of the evaporator 4 and upstream of the compressor 5.

The cooling apparatus 60 includes an expansion unit 8. The expansion unit 8, in an embodiment, is formed as a calibrated orifice. The expansion unit 8, in an embodiment, is arranged at the inlet 71 of the distributor 7. The expansion unit 8 in an embodiment is arranged into the inlet 71 of the distributor 7. The expansion unit 8 in an embodiment is external of the distributor 7, connected to its inlet 71.

The distributor 7 is arranged close to the heating elements of the inverter 6. The distributor 7 is configured to provide a heat transfer from the heating elements of the inverter 6 towards the refrigerant fluid flowing through the distributor 7, from its inlet 71 to its outlet 72.

The distributor 7 includes an inlet collector 73. The inlet collector 73 is connected to the inlet 71 to receive the refrigerant fluid. The distributor 7 includes a plurality of pipes, departing from the inlet collector 73. The pipes of said plurality have a first end connected to the inlet collector 73. The distributor 7 includes an outlet collector 74. The outlet collector 74 is connected to the pipes of said plurality for receiving the refrigerant fluid from the pipes. The pipes of said plurality have a second end connected to the outlet collector 74. The outlet collector 74 is connected to the outlet 72 of the distributor 7, for guiding the refrigerant fluid out of the distributor 7. In an embodiment, the plurality of pipes includes: a first pipe 75A, a second pipe 75B, a third pipe 75C and a fourth pipe 75D. The first pipe 75A is arranged close to the first switch 62, to cool down the first switch 62. The second pipe 75B is arranged close to the second switch 63, to cool down the second switch 63. The third pipe 75C is arranged close to the third switch 64, to cool down the third switch 64. The fourth pipe 75D is arranged close to the rectifier 61, to cool down the rectifier 61. In an embodiment, the pipes 75A, 75B, 75C, 75D are arranged above the respective heating elements. In an embodiment, the pipes are arranged under the respective heating elements. In an embodiment, the pipes are arranged beside (next to) the respective heating elements.

In an embodiment, the distributor 7 comprises a plurality of additional pipes. In an embodiment, the plurality of additional pipes includes: a first additional pipe 76A, a second additional pipe 76B, a third additional pipe 76C and a fourth additional pipe 76D. The first additional pipe 76A is arranged close to the first switch 62, to cooperate with the first pipe 75A to cool down the first switch 62. The second additional pipe 76B is arranged close to the second switch 63, to cool cooperate with the second pipe 75B down the second switch 63. The third additional pipe 76C is arranged close to the third switch 64, to cooperate with the third pipe 75C to cool down the third switch 64. The fourth additional pipe 76D is arranged close to the rectifier 61, to cooperate with the fourth pipe 75D to cool down the rectifier 61. Therefore, the first switch 62 is cooled down by the first pipe 75A and the first additional pipe 76A; the second switch 63 is cooled down by the second pipe 75B and the second additional pipe 76B; the third switch 64 is cooled down by the third pipe 75C and the third additional pipe 76C; the rectifier 61 is cooled down by the fourth pipe 75D and the fourth additional pipe 76D.

In an embodiment, the additional pipes 76A, 76B, 76C, 76D are arranged above the respective heating elements. In an embodiment, the additional pipes 76A, 76B, 76C, 76D are arranged under the respective heating elements. In an embodiment, the additional pipes 76A, 76B, 76C, 76D are arranged beside (next to) the respective heating elements.

In an embodiment, the additional pipes are connected in parallel to said pipes.

In an embodiment, the additional pipes 76A, 76B, 76C, 76D have a first end connected to the inlet collector 73 for receiving the refrigerant fluid from the inlet collector 73. In an embodiment, the additional pipes 76A, 76B, 76C, 76D have a second end connected to the outlet collector 74 for feeding the refrigerant fluid into the outlet collector 74.

In another embodiment, the first pipe 75A and the first additional pipe 76A have respective first ends connected to a first inlet coupling which is connected to the inlet collector 73 and/or respective second ends connected to a first outlet coupling which is connected to the outlet collector 74. Analogously, in an embodiment, the second pipe 75B and the second additional pipe 76B have respective first ends connected to a second inlet coupling which is connected to the inlet collector 73 and/or respective second ends connected to a second outlet coupling which is connected to the outlet collector 74. In an embodiment, the third pipe 75C and the third additional pipe 76C have respective first ends connected to a third inlet coupling which is connected to the inlet collector 73 and/or respective second ends connected to a third outlet coupling which is connected to the outlet collector 74. In an embodiment, the fourth pipe 75D and the fourth additional pipe 76D have respective first ends connected to a fourth inlet coupling which is connected to the inlet collector 73 and/or respective second ends connected to a fourth outlet coupling which is connected to the outlet collector 74.

In an embodiment, the pipes 75A, 75B, 75C, 75D are elongated parallel to a transversal direction T. In an embodiment, the additional pipes 76A, 76B, 76C, 76D are elongated parallel to the transversal direction T. In an embodiment, the inlet collector 73 is elongated parallel to a longitudinal direction L. In an embodiment, the outlet collector 74 is elongated parallel to the longitudinal direction L. The longitudinal direction L, preferably, is perpendicular to the transversal direction T.

In an embodiment, the cooling system 1 comprises a casing 77 containing the distributor 7. The casing 77, in an embodiment, includes an anti-condensing heater configured to heat up an external surface of the casing 77, for preventing a formation of condensation on the external surface of the casing 77.

In an embodiment, the cooling system 1 comprises a solenoid valve 9, arranged between the inlet 71 of the distributor 7 and the refrigeration circuit. The solenoid valve 9 is arranged upstream of the expansion unit 8. The solenoid valve is configured to regulate the flow of refrigerant fluid fed to the distributor 7. In an embodiment, the solenoid valve 9 is an ON/OFF valve.

In an embodiment, the cooling system 1 comprises a control unit 10. The control unit 10 is connected to the solenoid valve 9, to control the solenoid valve 9. The control unit 10 is connected to a temperature sensor configured to measure a temperature of the distributor 7 (or of the variable frequency drive 6). The control unit 10 is programmed for commanding an opening and a closing of the solenoid valve 9 as a function of a temperature of the distributor 7.

## Claims

1. A cooling system (1) comprising:
- a refrigerant fluid;
- a refrigeration circuit for circulating the refrigerant fluid, said refrigeration circuit including: a condenser (2), for condensing the refrigerant fluid; an expansion valve (3), for expanding the refrigerant fluid; an evaporator (4), for evaporating the refrigerant fluid; a compressor (5), for compressing the refrigerant fluid;
- a variable frequency drive (6) for driving the compressor (5), said variable frequency drive (6) comprising power electronics components to be cooled;
- a cooling apparatus (60) for cooling the power electronics components of the variable frequency drive (6), said cooling apparatus (60) including
an inlet (71), connected to the refrigeration circuit to receive a portion of the refrigerant fluid from the refrigeration circuit, and an outlet (72), connected to the refrigeration circuit, to re-insert said portion of the refrigerant fluid into the refrigeration circuit,
and an expansion unit (8), at the inlet (71) of the cooling apparatus (60),
**characterized in that** the cooling apparatus (60) comprises a distributor (7) which includes:
- an inlet collector (73) connected to the inlet (71) of the cooling apparatus (60);
- an outlet collector (74) connected to the outlet (72) of the cooling apparatus (60),
- a plurality of pipes (75A, 75B, 75C, 75D), wherein each pipe of said plurality of pipes has a first end connected to the inlet collector (73) and a second end connected to the outlet collector (74),
wherein the power electronic components of the variable frequency drive (6) comprise a plurality of heating elements (61, 62, 63, 64), and, for each heating element (61, 62, 63, 64) of said plurality of heating elements (61, 62, 63, 64), the plurality of pipes (75A, 75B, 75C, 75D) includes at least one respective pipe (75A, 75B, 75C, 75D), configured to cool down the heating element (61, 62, 63, 64), and
wherein said plurality of heating elements (61, 62, 63, 64) of the variable frequency drive (6) includes a first switch (62), a second switch (63), a third switch (64) and a rectifier (61), and the plurality of pipes (75A, 75B, 75C, 75D) includes at least a first pipe (75A), configured to cool down the first switch (62), a second pipe (75B), configured to cool down the second switch (63), a third pipe (75C), configured to cool down the third switch (64) and a fourth pipe (75D), configured to cool down the rectifier (61).

2. The cooling system (1) of any of claim 1, wherein the distributor (7) further comprises a plurality of additional pipes (76A, 76B, 76C, 76D), including, for each heating element (61, 62, 63, 64) of said plurality of heating elements (61, 62, 63, 64), at least one respective additional pipe (76A, 76B, 76C, 76D), connected in parallel to the respective pipe (75A, 75B, 75C, 75D), to cooperate with it to cool down the respective heating element (61, 62, 63, 64).

3. The cooling system (1) of claim 2, wherein each additional pipe (76A, 76B, 76C, 76D) of said plurality of additional pipes (76A, 76B, 76C, 76D) has a first end connected to the inlet collector (73) and a second end connected to the outlet collector (74).

4. The cooling system (1) of any of the previous claims, wherein the pipes (75A, 75B, 75C, 75D) of the plurality of pipes (75A, 75B, 75C, 75D) are elongated parallel to a transversal direction (T).

5. The cooling system (1) of any of the previous claims, wherein the expansion unit (8) is formed as a calibrated orifice.

6. The cooling system (1) of any of the previous claims, comprising a casing (77) surrounding the distributor (7), wherein said casing (77) includes an anti-condensing heater configured to heat up an external surface of the casing (77), for preventing a formation of condensation on the external surface of the casing (77).

7. The cooling system (1) of any of the previous claims, further comprising:
- a solenoid valve (9) arranged between the inlet (71) of the distributor (7) and the refrigeration circuit, to regulate the flow of refrigerant fluid fed to the distributor (7);
- a control unit (10) programmed for controlling the solenoid valve (9) as a function of a temperature of the distributor (7).

8. The cooling system (1) of any of the previous claims, wherein the refrigerant fluid is a hydrofluoroolefin.

9. The cooling system (1) of any of the previous claims, wherein the inlet (71) of the distributor (7) is connected to a branch of the refrigerant circuit downstream of the condenser (2) and upstream of the expansion valve (3).

10. The cooling system (1) of any of the previous claims, further comprising an economizer (11), for providing a pre-evaporation of the refrigerant fluid downstream of the condenser (2) and upstream of the expansion valve (3), wherein the inlet (71) of the distributor (7) is connected to a branch of the refrigerant circuit connecting an outlet of the condenser (2) to an inlet of the economizer (11).

11. The cooling system (1) of any of the previous claims, wherein the pipes of the plurality of pipes have a corrugated internal surface.

12. A method for cooling, comprising the following steps:
- providing a refrigerant fluid in a refrigeration circuit;
- condensing the refrigerant fluid through a condenser (2);
- expanding the refrigerant fluid through an expansion valve (3);
- evaporating the refrigerant fluid through an evaporator (4);
- compressing the refrigerant fluid through a compressor (5), wherein the compressing step comprises driving the compressor (5) through a variable frequency drive (6), which includes power electronics components;
- cooling down the electronics components of the variable frequency drive (6), through a cooling apparatus (60), wherein the cooling step includes the following sub-steps:
- drawing from the refrigeration circuit a portion of the refrigerant fluid and feeding it to an inlet (71) of the cooling apparatus (60),
- expanding said portion of the refrigerant fluid, through an expansion unit (8) at the inlet (71) of the cooling apparatus (60),
- circulating said portion of the refrigerant fluid from the inlet (71) to an outlet (72) of the cooling apparatus (60),
- re-inserting into the refrigeration circuit said portion of the refrigerant fluid released at the outlet (72) of the cooling apparatus (60), **characterized in that** in the cooling step the refrigerant fluid is distributed among a plurality of pipes (75A, 75B, 75C, 75D) of the distributor (7), wherein each pipe of said plurality of pipes (75A, 75B, 75C, 75D) has a first end connected to an inlet collector (73) of the distributor (7) and a second end connected to an outlet collector (74) of the distributor (7),
wherein the inlet collector (73) receives the refrigerant fluid from the inlet (71) and the outlet collector (74) feeds the refrigerant fluid to the outlet (72), wherein the variable frequency drive (6) comprises a plurality of heating elements (61, 62, 63, 64), and wherein the cooling step comprises, for each heating element (61, 62, 63, 64) of said plurality of heating elements (61, 62, 63, 64), circulating the refrigerant fluid through at least one respective pipe (75A, 75B, 75C, 75D) of said plurality of pipes (75A, 75B, 75C, 75D), to cool down the heating element,
wherein said plurality of heating elements (61, 62, 63, 64) of the variable frequency drive (6) includes a first switch (62), a second switch (63), a third switch (64) and a rectifier (61), and the plurality of pipes (75A, 75B, 75C, 75D) includes at least a first pipe (75A), configured to cool down the first switch (62), a second pipe (75B), configured to cool down the second switch (63), a third pipe (75C), configured to cool down the third switch (64) and a fourth pipe (75D), configured to cool down the rectifier (61).

## Patentansprüche

1. Kühlsystem (1) umfassend:
- ein Kältemittelfluid;
- einen Kältekreislauf zum Zirkulieren des Kältemittelfluids, wobei der Kältekreislauf umfasst: einen Verflüssiger (2) zum Verflüssigen des Kältemittelfluids; ein Expansionsventil (3) zum Expandieren des Kältemittelfluids; einen Verdampfer (4) zum Verdampfen des Kältemittelfluids; einen Verdichter (5) zum Verdichten des Kältemittelfluids;
- einen Frequenzumrichter (6) zum Antreiben des Verdichters (5), wobei der Frequenzumrichter (6) Leistungselektronikkomponenten umfasst, die gekühlt werden sollen;
- eine Kühlvorrichtung (60) zum Kühlen der Leistungselektronikkomponenten des Frequenzumrichters (6), wobei die Kühlvorrichtung (60)
einen Einlass (71), der mit dem Kältekreislauf verbunden ist, um einen Abschnitt des Kältemittelfluids vom Kältekreislauf zu erhalten und einen Auslass (72), der mit dem Kältekreislauf verbunden ist, um den Abschnitt des Kältemittelfluids wieder in den Kältekreislauf einzuführen,
und eine Expansionseinheit (8) am Einlass (71) der Kühlvorrichtung (60) einschließt,
**dadurch gekennzeichnet, dass** die Kühlvorrichtung (60) einen Verteiler (7) umfasst, der einschließt:
- einen Einlasssammler (73), der mit dem Einlass (71) der Kühlvorrichtung (60) verbunden ist;
- einen Auslasssammler (74), der mit dem Auslass (72) der Kühlvorrichtung (60) verbunden ist,
- eine Vielzahl an Rohren (75A, 75B, 75C, 75D), wobei ein jedes Rohr der Vielzahl an Rohren ein erstes Ende, das mit dem Einlasssammler (73) verbunden ist und ein zweites Ende, das mit dem Auslasssammler (74) verbunden ist, aufweist,
wobei die Leistungselektronikkomponenten des Frequenzumrichters (6) eine Vielzahl an Heizelementen (61, 62, 63, 64) umfassen, und, für ein jedes Heizelement (61, 62, 63, 64) der Vielzahl an Heizelementen (61, 62, 63, 64) die Vielzahl an Rohren (75A, 75B, 75C, 75D) mindestens ein jeweiliges Rohr (75A, 75B, 75C, 75D) einschließt, das zum Abkühlen des Heizelements (61, 62, 63, 64) ausgebildet ist, und
wobei die Vielzahl an Heizelementen (61, 62, 63, 64) des Frequenzumrichters (6) einen ersten Schalter (62), einen zweiten Schalter (63), einen dritten Schalter (64) und einen Gleichrichter (61) einschließt und die Vielzahl an Rohren (75A, 75B, 75C, 75D) mindestens ein erstes Rohr (75A), das zum Abkühlen des ersten Schalters (62) ausgebildet ist, ein zweites Rohr (75B), das zum Abkühlen des zweiten Schalters (63) ausgebildet ist, ein drittes Rohr (75C), das zum Abkühlen des dritten Schalters (64) ausgebildet ist, und ein viertes Rohr (75D), das zum Abkühlen des Gleichrichters (61) ausgebildet ist, einschließt.

2. Kühlsystem (1) nach Anspruch 1, wobei der Verteiler (7) ferner eine Vielzahl an zusätzlichen Rohren (76A, 76B, 76C, 76D) umfasst, die für ein jedes Heizelement (61, 62, 63, 64) der Vielzahl an Heizelementen (61, 62, 63, 64) mindestens ein jeweiliges zusätzliches Rohr (76A, 76B, 76C, 76D) einschließt, das parallel zu dem jeweiligen Rohr (75A, 75B, 75C, 75D) verbunden ist, um mit ihm zum Abkühlen des jeweiligen Heizelements (61, 62, 63, 64) zu kooperieren.

3. Kühlsystem (1) nach Anspruch 2, wobei ein jedes zusätzliche Rohr (76A, 76B, 76C, 76D) der Vielzahl an zusätzlichen Rohren (76A, 76B, 76C, 76D) ein erstes Ende, das mit dem Einlasssammler (73) verbunden ist und ein zweites Ende, das mit dem Auslasssammler (74) verbunden ist, aufweist.

4. Kühlsystem (1) nach einem der vorhergehenden Ansprüche, wobei die Rohre (75A, 75B, 75C, 75D) der Vielzahl an Rohren (75A, 758, 75C, 750) parallel zu einer Querrichtung (T) verlängert sind.

5. Kühlsystem (1) nach einem der vorhergehenden Ansprüche, wobei die Expansionseinheit (8) als kalibrierte Öffnung ausgebildet ist.

6. Kühlsystem (1) nach einem der vorhergehenden Ansprüche, umfassend ein Gehäuse (77), das den Verteiler (7) umgibt, wobei das Gehäuse (77) eine Antikondensationsheizung einschließt, die ausgebildet ist, um eine Außenfläche des Gehäuses (77) aufzuheizen, um die Kondensatbildung auf der Außenfläche des Gehäuses (77) zu verhindern.

7. Kühlsystem (1) nach einem der vorhergehenden Ansprüche, ferner umfassend:
- ein Magnetventil (9), das zwischen dem Einlass (71) des Verteilers (7) und dem Kältekreislauf angeordnet ist, um den Fluss des dem Verteiler (7) zugeführten Kältemittelfluids zu regeln;
- eine Steuereinheit (10), die zur Steuerung des Magnetventils (9) als Funktion einer Temperatur des Verteilers (7) programmiert ist.

8. Kühlsystem (1) nach einem der vorhergehenden Ansprüche, wobei das Kältemittelfluid ein Hydrofluorolefin ist.

9. Kühlsystem (1) nach einem der vorhergehenden Ansprüche, wobei der Einlass (71) des Verteilers (7) mit einem Zweig des Kältekreislaufs stromabwärts des Verflüssigers (2) und stromaufwärts des Expansionsventils (3) verbunden ist.

10. Kühlsystem (1) nach einem der vorhergehenden Ansprüche, ferner umfassend eine Spareinrichtung (11), um eine Vorverdampfung des Kältemittelfluids stromabwärts des Verflüssigers (2) und stromaufwärts des Expansionsventils (3) bereitzustellen, wobei der Einlass (71) des Verteilers (7) mit einem Zweig des Kältekreislaufs verbunden ist, der einen Auslass des Verflüssigers (2) mit einem Einlass der Spareinrichtung (11) verbindet.

11. Kühlsystem (1) nach einem der vorhergehenden Ansprüche, wobei die Rohre der Vielzahl an Rohren eine gewellte Innenfläche aufweisen.

12. Verfahren zum Kühlen, das die folgenden Schritte umfasst:
- Bereitstellen eines Kältemittelfluids in einem Kältekreislauf;
- Verflüssigen des Kältemittelfluids durch einen Verflüssiger (2);
- Expandieren des Kältemittelfluids durch ein Expansionsventil (3);
- Verdampfen des Kältemittelfluids durch einen Verdampfer (4);
- Verdichtern des Kältemittelfluids durch einen Verdichter (5), wobei der Verdichtungschritt das Antreiben des Verdichters (5) durch einen Frequenzumrichter (6) umfasst, der Leistungselektronikkomponenten einschließt;
- Abkühlen der Elektronikkomponenten des Frequenzumrichters (6) durch eine Kühlvorrichtung (60), wobei der Kühlschritt die folgenden Unterschritte einschließt:
- Entnehmen aus dem Kältekreislauf einen Abschnitt des Kältemittelfluids und dessen Zuführen zu einem Einlass (71) der Kühlvorrichtung (60),
- Expandieren des Abschnitts des Kältemittelfluids durch eine Expansionseinheit (8) am Einlass (71) der Kühlvorrichtung (60),
- Zirkulieren des Abschnitts des Kältemittelfluids vom Einlass (71) zu einem Auslass (72) der Kühlvorrichtung (60),
- erneutes Einführen des Abschnitts des Kältemittelfluids, das am Auslass (72) der Kühlvorrichtung (60) freigesetzt wird, in den Kältekreislauf, **dadurch gekennzeichnet, dass** im Kühlschritt das Kältemittelfluid unter einer Vielzahl an Rohren (75A, 75B, 75C, 75D) des Verteilers (7) verteilt ist, wobei ein jedes Rohr der Vielzahl an Rohren (75A, 75B, 75C, 75D) ein erstes Ende, das mit einem Einlasssammler (73) des Verteilers (7) verbunden ist, und ein zweites Ende, das mit einem Auslasssammler (74) des Verteilers (7) verbunden ist, aufweist, wobei der Einlasssammler (73) das Kältemittelfluid vom Einlass (71) erhält und der Auslasssammler (74) das Kältemittel dem Auslass (72) zuführt, wobei der Frequenzumrichter (6) eine Vielzahl an Heizelementen (61, 62, 63, 64) umfasst, wobei der Kühlschritt für ein jedes Heizelement (61, 62, 63, 64) eine Vielzahl an Heizelementen (61, 62, 63, 64) umfasst, die das Kältemittelfluid durch mindestens ein jeweiliges Rohr (75A, 75B, 75C, 75D) der Vielzahl an Rohren (75A, 75B, 75C, 75D) zirkulieren lässt, um das Heizelement abzukühlen, wobei die Vielzahl an Heizelementen (61, 62, 63, 64) des Frequenzumrichters (6) einen ersten Schalter (62), einen zweiten Schalter (63), einen dritten Schalter (64) und einen Gleichrichter (61) einschließt und die Vielzahl an Rohren (75A, 75B, 75C, 75D) mindestens ein erstes Rohr (75A), das zum Abkühlen des ersten Schalters (62) ausgebildet ist, ein zweites Rohr (75B), das zum Abkühlen des zweiten Schalters (63) ausgebildet ist, ein drittes Rohr (75C), das zum Abkühlen des dritten Schalters (64) ausgebildet ist, und ein viertes Rohr (75D), das zum Abkühlen des Gleichrichters (61) ausgebildet ist, einschließt.

## Revendications

1. Système de refroidissement (1), comprenant :
- un fluide frigorigène ;
- un circuit frigorifique servant à faire circuler le fluide frigorigène, ledit circuit frigorifique incluant : un condensateur (2) servant à condenser le fluide frigorigène ; un détendeur (3) servant à détendre le fluide frigorigène ; un évaporateur (4) servant à évaporer le fluide frigorigène ; un compresseur (5) servant à comprimer le fluide frigorigène ;
- un variateur de fréquence (6) servant à actionner le compresseur (5), ledit variateur de fréquence (6) comprenant des composants électroniques de puissance à refroidir ;
- un appareil de refroidissement (60) servant à refroidir les composants électroniques de puissance du variateur de fréquence (6), ledit appareil de refroidissement (60) comprenant
une entrée (71) reliée au circuit frigorifique pour recevoir une partie du fluide frigorigène du circuit frigorifique, et une sortie (72) reliée au circuit frigorifique pour réintroduire ladite partie du fluide frigorigène dans le circuit frigorifique,
et une unité d'expansion (8) à l'entrée (71) de l'appareil de refroidissement (60),
**caractérisé en ce que** l'appareil de refroidissement (60) comprend un distributeur (7) incluant :
- un collecteur d'entrée (73) relié à l'entrée (71) de l'appareil de refroidissement (60) ;
- un collecteur de sortie (74) relié à la sortie (72) de l'appareil de refroidissement (60),
- une pluralité de tuyaux (75A, 75B, 75C, 75D), dans laquelle chaque tuyau de ladite pluralité de tuyaux comporte une première extrémité reliée au collecteur d'entrée (73) et une seconde extrémité reliée au collecteur de sortie (74),
dans lequel les composants électroniques de puissance du variateur de fréquence (6) comprennent une pluralité d'éléments chauffants (61, 62, 63, 64), et, pour chaque élément chauffant (61, 62, 63, 64) de ladite pluralité d'éléments chauffants (61, 62, 63, 64), la pluralité de tuyaux (75A, 75B, 75C, 75D) comprend au moins un tuyau respectif (75A, 75B, 75C, 75D) configuré pour refroidir l'élément chauffant (61, 62, 63, 64), et
dans lequel ladite pluralité d'éléments chauffants (61, 62, 63, 64) du variateur de fréquence (6) comprend un premier interrupteur (62), un deuxième interrupteur (63), un troisième interrupteur (64) et un redresseur (61), et la pluralité de tuyaux (75A, 75B, 75C, 75D) comprend au moins un premier tuyau (75A) configuré pour refroidir le premier interrupteur (62), un deuxième tuyau (75B) configuré pour refroidir le deuxième interrupteur (63), un troisième tuyau (75C) configuré pour refroidir le troisième interrupteur (64) et un quatrième tuyau (75D) configuré pour refroidir le redresseur (61).

2. Système de refroidissement (1) selon la revendication 1, dans lequel le distributeur (7) comprend de plus une pluralité de tuyaux supplémentaires (76A, 76B, 76C, 76D) incluant, pour chaque élément chauffant (61, 62, 63, 64) de ladite pluralité d'éléments chauffants (61, 62, 63, 64), au moins un tuyau supplémentaire (76A, 76B, 76C, 76D) respectif, relié en parallèle au tuyau respectif (75A, 75B, 75C, 75D), pour coopérer avec celui-ci afin de refroidir l'élément chauffant (61, 62, 63, 64) respectif.

3. Système de refroidissement (1) selon la revendication 2, dans lequel chaque tuyau supplémentaire (76A, 76B, 76C, 76D) de ladite pluralité de tuyaux supplémentaires (76A, 76B, 76C, 76D) comporte une première extrémité reliée au collecteur d'entrée (73) et une seconde extrémité reliée au collecteur de sortie (74).

4. Système de refroidissement (1) selon l'une quelconque des revendications précédentes, dans lequel les tuyaux (75A, 75B, 75C, 75D) de la pluralité de tuyaux (75A, 75B, 75C, 75D) sont allongés parallèlement à une direction transversale (T).

5. Système de refroidissement (1) selon l'une quelconque des revendications précédentes, dans lequel l'unité d'expansion (8) est formée comme un orifice calibré.

6. Système de refroidissement (1) selon l'une quelconque des revendications précédentes, comprenant une carcasse (77) entourant le distributeur (7), dans lequel ladite carcasse (77) comprend un réchauffeur anti-condensation configuré pour chauffer une surface externe de la carcasse (77), pour empêcher la formation de condensation sur la surface externe de la carcasse (77) .

7. Système de refroidissement (1) selon l'une quelconque des revendications précédentes, comprenant de plus :
- une électrovanne (9), disposée entre l'entrée (71) du distributeur (7) et le circuit frigorifique, pour réguler le débit du fluide frigorigène alimentant le distributeur (7) ;
- une unité de commande (10) programmée pour commander l'électrovanne (9) en fonction d'une température du distributeur (7).

8. Système de refroidissement (1) selon l'une quelconque des revendications précédentes, dans lequel le fluide frigorigène est une hydrofluoroléfine.

9. Système de refroidissement (1) selon l'une quelconque des revendications précédentes, dans lequel l'entrée (71) du distributeur (7) est reliée à une branche du circuit frigorifique en aval du condensateur (2) et en amont du détendeur (3).

10. Système de refroidissement (1) selon l'une quelconque des revendications précédentes, comprenant de plus un économiseur (11) servant à assurer une pré-évaporation du fluide frigorigène en aval du condensateur (2) et en amont du détendeur (3), dans lequel l'entrée (71) du distributeur (7) est reliée à une branche du circuit frigorifique reliant une sortie du condensateur (2) à une entrée de l'économiseur (11).

11. Système de refroidissement (1) selon l'une quelconque des revendications précédentes, dans lequel les tuyaux de la pluralité de tuyaux ont une surface interne ondulée.

12. Procédé de refroidissement, comprenant les étapes suivantes :
- fournir un fluide frigorigène dans un circuit frigorifique ;
- condenser le fluide frigorigène à travers un condensateur (2) ;
- détendre le fluide frigorigène à travers un détendeur (3) ;
- évaporer le fluide frigorigène à travers un évaporateur (4) ;
- comprimer le fluide frigorigène par un compresseur (5), dans lequel l'étape de compression comprend l'actionnement du compresseur (5) par un variateur de fréquence (6) qui inclut des composants électroniques de puissance ;
- refroidir les composants électroniques du variateur de fréquence (6), par un appareil de refroidissement (60), dans lequel l'étape de refroidissement inclut les sous-étapes suivantes :
- prélever du circuit frigorifique une partie du fluide frigorigène et l'amener à une entrée (71) de l'appareil de refroidissement (60),
- détendre ladite partie du fluide frigorigène, par une unité d'expansion (8) à l'entrée (71) de l'appareil de refroidissement (60),
- faire circuler ladite partie du fluide frigorigène de l'entrée (71) à une sortie (72) de l'appareil de refroidissement (60),
- réintroduire dans le circuit frigorifique ladite partie du fluide frigorigène libérée à la sortie (72) de l'appareil de refroidissement (60), **caractérisé en ce que** dans l'étape de refroidissement, le fluide frigorigène est distribué parmi une pluralité de tuyaux (75A, 75B, 75C, 75D) du distributeur (7), dans lequel chaque tuyau de ladite pluralité de tuyaux (75A, 75B, 75C, 75D) comporte une première extrémité, reliée à un collecteur d'entrée (73) du distributeur (7), et une seconde extrémité reliée à un collecteur de sortie (74) du distributeur (7), dans lequel le collecteur d'entrée (73) reçoit le fluide frigorigène de l'entrée (71) et le collecteur de sortie (74) alimente le fluide frigorigène à la sortie (72), dans lequel le variateur de fréquence (6) comprend une pluralité d'éléments chauffants (61, 62, 63, 64), et dans lequel l'étape de refroidissement comprend, pour chaque élément chauffant (61, 62, 63, 64) de ladite pluralité d'éléments chauffants (61, 62, 63, 64), faire circuler le fluide frigorigène à travers au moins un tuyau respectif (75A, 75B, 75C, 75D) de ladite pluralité de tuyaux (75A, 75B, 75C, 75D), pour refroidir l'élément chauffant, dans lequel ladite pluralité d'éléments chauffants (61, 62, 63, 64) du variateur de fréquence (6) comprend un premier interrupteur (62), un deuxième interrupteur (63), un troisième interrupteur (64) et un redresseur (61), et la pluralité de tuyaux (75A, 75B, 75C, 75D) comprend au moins un premier tuyau (75A) configuré pour refroidir le premier interrupteur (62), un deuxième tuyau (75B) configuré pour refroidir le deuxième interrupteur (63), un troisième tuyau (75C) configuré pour refroidir le troisième interrupteur (64) et un quatrième tuyau (75D) configuré pour refroidir le redresseur (61).
